# FASCICULE DE BREVET EUROPEEN

(11) **EP 4 225 592 B1**
(45) Date de publication et mention de la délivrance du brevet: **02.12.2026**
(21) Numéro de dépôt: 21801971.9
(22) Date de dépôt: 07.10.2021
(51) Int. Cl.: B60C 9/18, B60C 9/08

(54) **PNEUMATIQUE COMPRENANT DEUX COUCHES DE CARCASSE**
REIFEN MIT ZWEI KARKASSENSCHICHTEN
TYRE COMPRISING TWO CARCASS LAYERS

(30) Priorité: 09.10.2020 FR 2010359
(43) Date de publication de la demande: 16.08.2023
(73) Titulaire: COMPAGNIE GENERALE DES ETABLISSEMENTS MICHELIN, 63040 Clermont-Ferrand (FR)
(72) Inventeur: DUCHEMIN, Sylvie, 63040 CLERMONT-FERRAND CEDEX 9 (FR); GUIMARD, Bruno, 63040 CLERMONT-FERRAND CEDEX 9 (FR); MOUREAU, Pierre, 63040 CLERMONT-FERRAND CEDEX 9 (FR)
(74) Mandataire: M.F.P. Michelin
(86) Numéro de dépôt international: PCT/FR2021/051745
(87) Numéro de publication internationale: WO 2022/074343

(56) Documents cités:
- EP-A1- 0 622 252
- EP-A1- 3 643 540
- EP-A2- 1 201 462
- EP-B1- 0 622 252
- WO-A1-2018/172695
- WO-A1-2020/128207
- JP-A- 2002 067 635
- US-A1- 2018 093 532
- "ETRTO Standards Manual 2019", 30 June 2019, ETRTO, pages: 14, 32
- CONTINENTAL AG: "Tyre Databook Car 4x4 Van 2019 - 2020", 30 August 2019 (2019-08-30), pages 1 - 133, XP055877447, Retrieved from the Internet <URL:https://blobs.continental-tires.com/www8/servlet/blob/376746/e7bc88056a2e824d499c056ec3266193/download-technical-databook-data.pdf> [retrieved on 20220111]

## Description

La présente invention concerne un pneumatique, un ensemble monté comprenant un tel pneumatique et un véhicule de tourisme comprenant un tel pneumatique ou un tel ensemble monté. Par pneumatique, on entend un bandage destiné à former une cavité en coopérant avec un élément de support de l'ensemble monté, cette cavité étant apte à être pressurisée à une pression supérieure à la pression atmosphérique. Un ensemble monté selon l'invention présente une structure de forme sensiblement toroïdale de révolution autour d'un axe principal de l'ensemble monté confondu avec l'axe principal du pneumatique.

L'avènement des véhicules de tourisme à motorisation électrique ou hybride entraine une augmentation du poids des véhicules, notamment en raison des batteries dont le poids est relativement important et sensiblement proportionnel à l'autonomie des véhicules. Ainsi, par exemple, pour augmenter l'autonomie d'un véhicule électrique, il est nécessaire d'augmenter la taille des batteries et par conséquent, le poids du véhicule.

De façon simple, on estime aujourd'hui qu'un kilomètre d'autonomie d'un moteur électrique conduit à augmenter le poids du véhicule d'un kilogramme. Ainsi, afin d'atteindre une autonomie de 500 kilomètres, il est nécessaire d'augmenter le poids d'un véhicule à motorisation thermique d'environ 500 kg. Afin d'équiper de tels véhicules, il est nécessaire d'utiliser des pneumatiques capables de porter une charge très élevée.

On connait de l'état de la technique un pneumatique pour véhicule de tourisme, ce pneumatique étant capable de porter une charge relativement élevée. Ce pneumatique est commercialisé sous la marque MICHELIN^{™} dans la gamme Pilot Sport 4 et présente une dimension 255/35R18. Ce pneumatique présente une version EXTRA-LOAD (en abrégé XL) au sens du manuel de la norme ETRTO 2019 et, dans cette version EXTRA-LOAD, présente un indice de charge égal à 94. Cela signifie que, à une pression de 290 kPa, le pneumatique est capable de porter une charge de 670 kg. Cette capacité de charge est relativement élevée par rapport à un pneumatique de même dimension et qualifié de STANDARD LOAD (en abrégé SL) présentant un indice de charge égal à 90 et qui est capable lui, de porter une charge de 600 kg à une pression de 250 kPa.

Afin de pouvoir être mis sur le marché, un tel pneumatique doit satisfaire des tests règlementaires. Par exemple en Europe, le pneumatique doit satisfaire à l'essai de performance charge/vitesse décrit en annexe VII du Règlement n°30 de la CEE-ONU.

Néanmoins, que ce soit dans sa version EXTRA-LOAD, et encore plus dans sa version STANDARD LOAD, un tel pneumatique n'est pas capable de porter le surplus de charge correspondant aux batteries nécessaires pour atteindre l'autonomie souhaitée. Ainsi, les manufacturiers pneumatiques ont dû proposer de nouvelles solutions afin de répondre à ce nouveau besoin.

Une solution envisagée par les manufacturiers pneumatiques est, pour un véhicule donné, l'utilisation de pneumatiques présentant une dimension plus importante ce qui permettrait de porter plus de charge. Ainsi, un véhicule donné pourrait être équipé de pneumatiques présentant un indice de charge plus élevé. Par exemple, un véhicule équipé des pneumatiques décrits ci-dessus dans leur version EXTRA LOAD pourrait être équipé de pneumatiques de dimension 275/35R19 dans leur version EXTRA-LOAD qui présentent un indice de charge égal à 100 et capable, à une pression de 290 kPa, de porter une charge de 800 kg, bien supérieure à la charge de 670 kg.

D'une part, une telle augmentation de la dimension des pneumatiques entraine nécessairement soit une réduction de l'espace intérieur du véhicule, soit un agrandissement du gabarit extérieur du véhicule, ce qui, dans les deux cas n'est pas souhaitable pour des raisons d'habitabilité et de compacité du véhicule.

D'autre part, une telle augmentation de la dimension des pneumatiques entraine une nouvelle conception du châssis du véhicule, ce qui pour des raisons évidentes de coûts, n'est pas non plus souhaitable.

Enfin, une telle augmentation de la dimension des pneumatiques, notamment de la largeur de section nominale, entraine une hausse du bruit extérieur généré par le pneumatique ainsi qu'une hausse de la résistance au roulement, ce qui n'est pas non plus souhaitable si on souhaite réduire les nuisances sonores et la consommation énergétique du véhicule.

Ainsi, une autre solution envisagée par les manufacturiers pneumatiques est, pour une dimension donnée et une version donnée d'un pneumatique, d'augmenter sa pression de gonflage recommandée. En effet, plus la pression est élevée, plus le pneumatique est capable de porter une charge élevée.

Néanmoins, l'utilisation d'une pression recommandée relativement élevée rigidifie le pneumatique et entraine une perte de confort pour les passagers du véhicule ce qui n'est évidemment pas souhaité par certains constructeurs automobiles dans les cas où le confort des passagers est prioritaire sur la charge pouvant être portée.

Un autre problème rencontré par les manufacturiers de pneumatiques est la mise en tension relativement importante de l'armature de carcasse des pneumatiques présentant des flancs relativement hauts et ce, d'autant plus que la charge à porter est importante.

On connait de l'état de la technique des pneumatiques décrits dans EP0622252A1 WO2018172695A1, XP055877447 et US2018/093532A1. On connait également le manuel de la norme ETRTO 2019.L'invention a pour but de fournir un pneumatique capable de porter une charge plus importante que les pneumatiques existants sans impliquer nécessairement un accroissement de la pression recommandée du pneumatique tout en maitrisant la mise en tension de l'armature de carcasse du pneumatique sans sacrifier l'habitabilité, la compacité et le confort du véhicule.

Ainsi, l'invention a pour objet un pneumatique pour véhicule de tourisme comprenant un sommet, deux bourrelets, deux flancs reliant chacun chaque bourrelet au sommet et une armature de carcasse ancrée dans chaque bourrelet, le sommet comprenant une armature de sommet et une bande de roulement, l'armature de carcasse s'étendant dans chaque flanc et dans le sommet radialement intérieurement à l'armature de sommet,
le pneumatique présentant un indice de charge LI tel que LI ≥ LI'+1 et LI' étant l'indice de charge d'un pneumatique EXTRA LOAD présentant la même dimension selon le manuel de la norme ETRTO 2019,
le pneumatique présentant une hauteur de flanc H définie par H=SW x AR / 100 avec SW la largeur de section nominale et AR le rapport d'aspect nominal du pneumatique selon le manuel de la norme ETRTO 2019 telle que H ≥ 95, et
l'armature de carcasse comprenant des première et deuxième couches de carcasse.

Conformément à l'invention, le pneumatique est un pneumatique pour véhicule de tourisme. Un tel pneumatique est par exemple défini dans le manuel de la norme ETRTO 2019 (European Tyre and Rim Technical Organisation). Un tel pneumatique présente, généralement sur au moins un des flancs, un marquage conforme au marquage du manuel de la norme ETRTO 2019 indiquant la dimension du pneumatique sous la forme X/Y α V U β avec X désignant la largeur de section nominale, Y désignant le rapport d'aspect nominal, α désignant la structure et pouvant être R ou ZR, V désignant le diamètre de jante nominale, U désignant l'indice de charge et β désignant le symbole de vitesse.

L'indice de charge LI' est l'indice de charge d'un pneumatique présentant la même dimension, c'est-à-dire la même largeur de section nominale, le même rapport d'aspect nominal, la même structure (R et ZR étant considérée comme identique) et le même diamètre de jante nominale. L'indice de charge LI' est donné par le manuel de la norme ETRTO 2019, notamment dans la Partie intitulée Passenger Car Tyres - Tyres with Metric Designation, pages 20 à 41.

En augmentant l'indice de charge du pneumatique de l'invention par rapport à l'indice de charge d'un pneumatique présentant la même dimension dans sa version EXTRA-LOAD, l'invention permet d'augmenter la capacité de charge de l'ensemble monté sans pour autant modifier l'habitabilité, la compacité et le confort du véhicule sur lequel il est utilisé. En effet, la dimension du pneumatique selon l'invention étant identique à celle du pneumatique dans sa version EXTRA-LOAD, l'ensemble monté n'encombre pas davantage que le pneumatique dans sa version EXTRA-LOAD. Un pneumatique selon l'invention pourra porter un marquage distinctif permettant de le distinguer de sa version STANDARD LOAD et de sa version EXTRA-LOAD, par exemple un marquage du type HL (pour HIGH LOAD) ou XL+ (pour EXTRA LOAD +). Un tel marquage est notamment divulgué dans le manuel de la norme ETRTO 2021, page 3 de la section General Notes - Passenger Car tyres pour désigner des pneumatiques de type HIGH LOAD CAPACITY. Des exemples de dimensions sont également divulgués dans le manuel de la norme ETRTO 2021, page 44, paragraphe 9.1 de la section Passenger Car tyres - Tyres with metric designation.

Comme expliqué ci-dessus, les pneumatiques présentant une hauteur de flanc relativement importante conduisent à une mise en tension relativement importante de l'armature de carcasse, notamment de la portion de l'armature de carcasse ancrée dans le bourrelet, par exemple par enroulement autour d'un élément de renforcement circonférentiel comme une tringle et ce en raison du volume de gaz de gonflage relativement important qu'ils contiennent en comparaison d'un pneumatique présentant une hauteur de flanc relativement faible. Cette mise en tension est d'autant plus élevée que la charge portée est élevée, ce qui est le cas des pneumatiques présentant un indice de charge LI conforme à l'invention. Ainsi, il est essentiel d'utiliser deux couches de carcasse ce qui permet de réduire significativement la mise en tension de chaque couche de carcasse.

De plus, contrairement aux pneumatiques présentant des flancs relativement courts, c'est-à-dire pour lesquels H < 95, les pneumatiques selon l'invention présentent une mise en compression relativement faible de l'armature de carcasse en raison de leurs flancs relativement hauts. Le risque de détérioration prématurée de l'armature de carcasse, notamment à forte charge et sous une pression relativement faible, est donc écarté malgré la présence de deux couches de carcasse.

Chaque première et deuxième couche de carcasse est délimitée axialement par deux bords axiaux respectivement de chaque première et deuxième couche de carcasse et comprend des éléments de renfort filaires de carcasse s'étendant axialement d'un bord axial à l'autre bord axial respectivement de chaque première et deuxième couche de carcasse.

La largeur de section nominale SW et le rapport d'aspect nominal AR sont ceux du marquage de la dimension inscrite sur le flanc du pneumatique et conformes au manuel de la norme ETRTO 2019.

Le pneumatique selon l'invention présente une forme sensiblement torique autour d'un axe de révolution sensiblement confondu avec l'axe de rotation du pneumatique. Cet axe de révolution définit trois directions classiquement utilisées par l'homme du métier : une direction axiale, une direction circonférentielle et une direction radiale.

Par direction axiale, on entend la direction sensiblement parallèle à l'axe de révolution du pneumatique ou de l'ensemble monté, c'est-à-dire l'axe de rotation du pneumatique ou de l'ensemble monté.

Par direction circonférentielle, on entend la direction qui est sensiblement perpendiculaire à la fois à la direction axiale et à un rayon du pneumatique ou de l'ensemble monté (en d'autres termes, tangente à un cercle dont le centre est sur l'axe de rotation du pneumatique ou de l'ensemble monté).

Par direction radiale, on entend la direction selon un rayon du pneumatique ou de l'ensemble monté, c'est-à-dire une direction quelconque coupant l'axe de rotation du pneumatique ou de l'ensemble monté et sensiblement perpendiculaire à cet axe.

Par plan médian du pneumatique (noté M), on entend le plan perpendiculaire à l'axe de rotation du pneumatique qui est situé à mi-distance axiale des deux bourrelets et passe par le milieu axial de l'armature de sommet.

Par plan circonférentiel équatorial du pneumatique, on entend, dans un plan de coupe méridien, le plan passant par l'équateur du pneumatique, perpendiculaire au plan médian et à la direction radiale. L'équateur du pneumatique est, dans un plan de coupe méridien (plan perpendiculaire à la direction circonférentielle et parallèle aux directions radiale et axiales) l'axe parallèle à l'axe de rotation du pneumatique et située à équidistance entre le point radialement le plus extérieur de la bande de roulement destiné à être au contact avec le sol et le point radialement le plus intérieur du pneumatique destiné à être en contact avec un support, par exemple une jante.

Par plan méridien, on entend un plan parallèle à et contenant l'axe de rotation du pneumatique ou de l'ensemble monté et perpendiculaire à la direction circonférentielle.

Par radialement intérieur, respectivement radialement extérieur, on entend plus proche de l'axe de rotation du pneumatique, respectivement plus éloigné de l'axe de rotation du pneumatique. Par axialement intérieur, respectivement axialement extérieur, on entend plus proche du plan médian du pneumatique, respectivement plus éloigné du plan médian du pneumatique.

Par bourrelet, on entend la portion du pneumatique destiné à permettre l'accrochage du pneumatique sur un support de montage, par exemple une roue comprenant une jante. Ainsi, chaque bourrelet est notamment destiné à être au contact d'un crochet de la jante permettant son accrochage.

Tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

De préférence, chaque première et deuxième couche de carcasse s'étend dans chaque flanc et dans le sommet radialement intérieurement à l'armature de sommet.

Dans un mode de réalisation optionnel mais néanmoins avantageux, H ≥ 100.

Dans un mode de réalisation avantageux, LI'+1 ≤ LI ≤ LI'+4, de préférence LI'+2 ≤ LI ≤ LI'+4. Ainsi, on augmente davantage la capacité de chargement du pneumatique.

De façon optionnelle, chaque première et deuxième couche de carcasse est délimitée axialement par deux bords axiaux de la couche de carcasse et comprend des éléments de renfort filaires textiles de carcasse s'étendant axialement d'un bord axial à l'autre bord axial de la couche de carcasse selon une direction principale formant, avec la direction circonférentielle du pneumatique un angle allant, en valeur absolue, de 80° à 90°.

Par élément filaire, on entend un élément présentant une longueur au moins 10 fois plus grande que la plus grande dimension de sa section quelle que soit la forme de cette dernière : circulaire, elliptique, oblongue, polygonale, notamment rectangulaire ou carrée ou ovale. Dans le cas d'une section rectangulaire, l'élément filaire présente la forme d'une bande.

Par textile, on entend un élément filaire comprenant un ou plusieurs monofilaments élémentaires textiles éventuellement revêtu d'une ou plusieurs couches d'un revêtement à base d'une composition adhésive. Ce ou ces monofilaments élémentaires textiles est ou sont obtenus, par exemple, par filage au fondu, filage en solution ou filage de gel. Chaque monofilament élémentaire textile est réalisé dans un matériau organique, notamment polymérique, ou inorganique, comme par exemple le verre ou le carbone. Les matériaux polymériques peuvent être du type thermoplastique, comme par exemple les polyamides aliphatiques, notamment les polyamides 6-6, et les polyesters, notamment le polyéthylène téréphthalate. Les matériaux polymériques peuvent être du type non thermoplastique, comme par exemple les polyamides aromatiques, notamment l'aramide, et la cellulose, naturelle comme artificielle, notamment la rayonne.

Dans un mode de réalisation préféré, une des première et deuxième couches de carcasse forme un enroulement autour d'un élément de renforcement circonférentiel de chaque bourrelet de sorte qu'une portion axialement intérieure de ladite couche de carcasse est agencée axialement à l'intérieur d'une portion axialement extérieure de ladite couche de carcasse et de sorte que chaque extrémité axiale de ladite couche de carcasse soit agencée radialement à l'extérieur de chaque élément de renforcement circonférentiel.

Dans certaines variantes préférées, quelle que soit la hauteur de flanc, chaque extrémité axiale de la couche de carcasse formant l'enroulement est agencée radialement à l'intérieur de l'équateur du pneumatique et encore plus préférentiellement agencée à une distance radiale inférieure ou égale à 30 mm d'une extrémité radialement intérieure de chaque élément de renforcement circonférentiel de chaque bourrelet.

En agençant chaque extrémité axiale de la couche de carcasse enroulée à l'intérieur de l'équateur du pneumatique, on réduit significativement la masse de l'armature de carcasse. En outre, l'immense majorité des jantes actuellement utilisées pour des pneumatiques pour véhicule de tourisme présente des crochets de type J dont la hauteur est, dans tous les cas inférieure à 30 mm. L'agencement très préférentiel de chaque extrémité axiale dans une zone correspondant radialement sensiblement au crochet de jante permet de protéger mécaniquement chaque extrémité axiale. En effet, si chaque extrémité axiale était agencée radialement trop au-dessus de chaque élément de renforcement circonférentiel de chaque bourrelet, c'est-à-dire à une distance radiale strictement supérieure à 30 mm de l'extrémité radialement intérieure de chaque élément de renforcement circonférentiel, chaque extrémité axiale se retrouverait alors dans une zone flexible du pneumatique soumise à de trop fortes sollicitations, sollicitations qui sont très importantes dans le cas d'un pneumatique de type HIGH LOAD CAPACITY.

Dans une première configuration préférée compatible avec la présence d'une première et d'une deuxième couches de carcasse, la première couche de carcasse forme un enroulement autour d'un élément de renforcement circonférentiel de chaque bourrelet de sorte qu'une portion axialement intérieure de la première couche de carcasse est agencée axialement à l'intérieur d'une portion axialement extérieure de la première couche de carcasse et de sorte que chaque extrémité axiale de la première couche de carcasse soit agencée radialement à l'extérieur de chaque élément de renforcement circonférentiel, et chaque extrémité axiale de la deuxième couche de carcasse est agencée radialement à l'intérieur de chaque extrémité axiale de la première couche et est agencée :
- axialement entre les portions axialement intérieure et extérieure de la première couche de carcasse, ou
- axialement à l'intérieur de portion axialement intérieure de la première couche de carcasse,
et de préférence, chaque extrémité axiale de la deuxième couche de carcasse est agencée axialement entre les portions axialement intérieure et extérieure de la première couche de carcasse.

Un tel agencement des première et deuxième couches de carcasse permet d'obtenir un couplage mécanique efficace entre les première et deuxième couches de carcasse permettant de réduire les cisaillements entre la première et la deuxième couche de carcasse. Ainsi, on réduit la dissipation d'énergie et l'élévation de la température du pneumatique et ce d'autant plus que les cisaillements sont particulièrement élevés à fortes charges.

En effet, un tel agencement de l'armature de carcasse est particulièrement avantageux dans le cas où 95 ≤ H ≤ 155. En effet, En limitant la hauteur de flanc du pneumatique à des hauteurs de flancs H telles que 95 ≤ H ≤ 155, on réduit le volume de gaz et donc la mise en tension de l'armature de carcasse à un niveau raisonnable.

En outre, grâce à l'agencement particulier des première et deuxième couches de carcasse, on obtient de façon surprenante un pneumatique avec une dissipation d'énergie et une température de fonctionnement optimales dans le flanc, notamment à forte charge et sous une pression inférieure ou égale à la pression recommandée pour un pneumatique de même dimension dans sa version STANDARD LOAD ou EXTRA-LOAD. Ceci est d'autant plus surprenant que l'agencement particulier des première et deuxième couches de carcasse est situé dans une zone du pneumatique, ici dans le bourrelet ou à proximité du bourrelet, et que cela permet de réduire la dissipation d'énergie dans une autre zone du pneumatique, éloignée du bourrelet, ici le flanc. On a découvert que l'agencement particulier de l'armature de carcasse, c'est-à-dire le fait que chaque extrémité axiale de la deuxième couche de carcasse est agencée axialement entre les portions axialement intérieure et extérieure de la première couche de carcasse, ou axialement à l'intérieur de la portion axialement intérieure de la première couche de carcasse, permet de réduire la différence de tensions entre la première couche de carcasse et la deuxième couche de carcasse. Or, plus la différence de tensions entre les première et deuxième couches de carcasse est réduite, moins on génère de cisaillement entre ces première et deuxième couches de carcasse et moins on dissipe d'énergie.

Dans une deuxième configuration compatible avec la présence d'une première et d'une deuxième couches de carcasse, la première couche de carcasse forme un enroulement autour d'un élément de renforcement circonférentiel de chaque bourrelet de sorte qu'une portion axialement intérieure de la première couche de carcasse est agencée axialement à l'intérieur d'une portion axialement extérieure de la première couche de carcasse et de sorte que chaque extrémité axiale de la première couche de carcasse soit agencée radialement à l'extérieur de chaque élément de renforcement circonférentiel, et chaque extrémité axiale de la deuxième couche de carcasse est agencée radialement à l'intérieur de chaque extrémité axiale de la première couche et est agencée axialement à l'extérieur de chaque portion axialement extérieure de la première couche de carcasse.

Cette deuxième configuration est particulièrement avantageuse dans le cas où H > 155. En effet, pour des pneumatiques de type HIGH LOAD CAPACITY présentant une hauteur de flanc très importante telle que H>155, la tension de l'extrémité de la première couche de carcasse devenant très élevée, on devra envisager une armature de carcasse dans laquelle, à la différence de l'agencement décrit dans la première configuration, chaque extrémité axiale de la deuxième couche de carcasse est agencée axialement à l'extérieur de chaque portion axialement extérieure de la première couche de carcasse. Avec un tel agencement de l'armature de carcasse, on réduira la tension de l'extrémité de la première couche de carcasse à un niveau raisonnable.

Pour des pneumatiques de type HIGH LOAD CAPACITY présentant une hauteur de flanc très importante, c'est-à-dire avec H>155, même si la différence de tensions entre la première couche de carcasse et la deuxième couche de carcasse reste importante, la hauteur du flanc permet d'avoir une zone de cisaillement relativement grande qui dissipe efficacement l'énergie et pour laquelle il n'est pas préférable d'avoir l'agencement des première et deuxième couches de carcasse décrit dans la première configuration.

De préférence, chaque élément de renfort filaire textile de carcasse comprend un assemblage d'au moins deux brins multifilamentaires et présentant un titre total inférieur ou égal à 475 tex.

En effet, la présence de deux couches de carcasse permet de réduire le titre total de chaque élément de renfort filaire textile de carcasse de chaque couche et ce tout en ayant une résistance mécanique suffisante de l'armature de carcasse.

De façon optionnelle, chaque élément de renfort filaire textile de carcasse de chaque première et deuxième couche de carcasse présente respectivement un diamètre moyen D1, D2 tel que D1 ≤ 0,90 mm et D2 ≤ 0,90 mm, de préférence D1 ≤ 0,85 mm et D2 ≤ 0,85 mm et plus préférentiellement D1 ≤ 0,75 mm et D2 ≤ 0,75 mm.

De tels diamètres D1 et D2 relativement petits permettent de limiter l'initiation de fissures à proximité de l'extrémité de chaque première et deuxième couche de carcasse. En effet, l'extrémité de chaque élément de renfort filaire textile de carcasse constitue un point de départ privilégié pour l'initiation de fissures, notamment en raison du fait qu'elle soit dépourvue de toute composition adhésive et donc peu adhérente à la matrice adjacente dans laquelle elle est noyée. En réduisant chaque diamètre D1, D2, on réduit la surface de l'extrémité et donc le risque d'initiation de fissures. Egalement de façon optionnelle, D1 et D2 sont tels que D1 ≥ 0,55 mm et D2 ≥ 0,55 mm, de préférence D1 ≥ 0,60 mm et D2 ≥ 0,60 mm.

Les titres (ou densité linéique) de chaque brin et élément de renfort filaire sont déterminés selon la norme ASTM D 885/D 885M - 10a de 2014. Le titre est donné en tex (poids en grammes de 1000 m de produit - rappel: 0, 111 tex égal à 1 denier).

Le diamètre de chaque élément de renfort filaire textile de carcasse est le diamètre du cercle le plus petit dans lequel est circonscrit l'élément de renfort filaire textile de carcasse. Le diamètre moyen est la moyenne des diamètres des éléments de renfort filaires textiles de carcasse situés sur une longueur de 10 cm de chaque couche de carcasse.

Chaque brin multifilamentaire est choisi parmi un brin multifilamentaire de polyester, un brin multifilamentaire de polyamide aromatique et un brin multifilamentaire de polyamide aliphatique, de préférence chaque brin multifilamentaire est choisi parmi un brin multifilamentaire de polyester et un brin multifilamentaire de polyamide aromatique.

Par brin multifilamentaire en polyester, on comprend un brin multifilamentaire constitué de monofilaments de macromolécules linéaires formées de groupes liés entre eux par des liaisons esters. Les polyesters sont fabriqués par polycondensation par estérification entre un diacide carboxylique ou l'un de ses dérivés et un diol. Par exemple, le polyéthylène téréphtalate peut être fabriqué par polycondensation de l'acide téréphtalique et de l'éthylène glycol. Parmi les polyesters connus, on pourra citer le polyéthylène téréphtalate (PET), le polyéthylène naphthalate (PEN), le polybutylène téréphthalate (PBT), le polybutylène naphthalate (PBN), le polypropylène téréphthalate (PPT) ou le polypropylène naphthalate (PPN).

Par brin multifilamentaire en polyamide aromatique, on comprend un brin multifilamentaire constitué de monofilaments de macromolécules linéaires formées de groupes aromatiques liés entre eux par des liaisons amides dont au moins 85% sont directement liées à deux noyaux aromatiques, et plus particulièrement de fibres en poly (p-phénylène téréphtalamide) (ou PPTA), fabriquées depuis fort longtemps à partir de compositions de filage optiquement anisotropes. Parmi les polyamides aromatiques, on pourra citer les polyarylamides (ou PAA, notamment connu sous la dénomination commerciale Ixef de la société Solvay), le poly(métaxylylène adipamide), les polyphtalamides (ou PPA, notamment connu sous la dénomination commerciale Amodel de la société Solvay), les polyamides semi-aromatiques amorphes (ou PA 6-3T, notamment connu sous la dénomination commerciale Trogamid de la société Evonik), les para-aramides (ou poly(paraphénylène téréphtalamide ou PA PPD-T notamment connu sous la dénomination commerciale Kevlar de la société Du Pont de Nemours ou Twaron de la société Teijin).

Par brin multifilamentaire en polyamide aliphatique, on comprend un brin multifilamentaire constitué de monofilaments de macromolécules linéaires de polymères ou copolymères contenant des fonctions amides ne présentant pas de cycles aromatiques et pouvant être synthétisés par polycondensation entre un acide carboxylique et une amine. Parmi les polyamides aliphatiques, on pourra citer les nylons PA4.6, PA6, PA6.6 ou encore PA6.10, et notamment le Zytel de la société DuPont, le Technyl de la société Solvay ou le Rilsamid de la société Arkema.

De façon très préférée, l'assemblage est choisi parmi un assemblage de deux brins multifilamentaires de polyester et un assemblage d'un brin multifilamentaire de polyester et d'un brin multifilamentaire de polyamide aromatique.

Conformément à l'invention, le pneumatique présente une largeur de section nominale SW allant de 225 à 315, un rapport d'aspect nominal allant de 25 à 55, un diamètre de jante nominale allant de 18 à 23 et un indice de charge LI allant de 98 à 116. Dans des modes de réalisation préférés, le pneumatique présente une largeur de section nominale SW allant de 245 à 315, un rapport d'aspect nominal allant de 30 à 45, un diamètre de jante nominale allant de 18 à 23 et un indice de charge LI allant de 98 à 116. Comme expliqué précédemment, les pneumatiques selon l'invention sont destinés à porter des charges relativement élevées conduisant nécessairement à une usure relativement élevée par rapport aux pneumatiques de mêmes dimensions dans leur version EXTRA LOAD. Ainsi, il est particulièrement avantageux d'utiliser des pneumatiques dont la largeur de section nominale est relativement élevée afin de réduire la pression exercée sur la bande de roulement et donc l'usure.

Conformément à l'invention, 0,88≤H/LI≤0,98. Ainsi, on applique l'invention à des pneumatiques susceptibles de fléchir de façon relativement importante car présentant un indice de charge relativement élevé pour une hauteur de flanc donné, c'est-à-dire satisfaisant H/LI≤0,98. Ceci est rendu possible par l'agencement particulier de l'armature de carcasse qui permet de réduire la dissipation d'énergie malgré un fléchissement significatif du flanc. Néanmoins, si le flanc est trop court par rapport à l'indice de charge, c'est-à-dire satisfaisant H/LI<0,88, la flexion du flanc entraine une mise en compression relativement importante de la première couche de carcasse et donc un accroissement de la dissipation d'énergie.

Des modes de réalisation particulièrement préférés sont ceux dans lesquels le pneumatique présente une dimension et un indice de charge LI choisi parmi les dimensions et les indices de charge suivants: 225/55R18 105, 225/55ZR18 105, 205/55R19 100, 205/55ZR19 100, 235/45R21 104, 235/45ZR21 104, 285/45R22 116, 285/45ZR22 116, 245/40R19 101, 245/40ZR19 101, 255/40R20 104, 255/40ZR20 104, 245/40R21 103, 245/40ZR21 103, 255/40R21 105, 255/40ZR21 105, 265/40R21 108, 265/40ZR21 108, 255/40R22 106, 255/40ZR22 106, 275/35R21 105, 275/35ZR21 105, 285/35R21 108, 285/35ZR21 108, 295/35R22 111, 295/35ZR22 111, 275/35R23 108, 275/35ZR23 108, 325/30R21 111, 325/30ZR21 111.

Conformément à l'invention, l'armature de sommet comprend une armature de travail comprenant une couche de travail radialement intérieure et une couche de travail radialement extérieure agencée radialement à l'extérieur de la couche de travail radialement intérieure.

Dans des modes de réalisation, chaque couche de travail est délimitée axialement par deux bords axiaux de ladite couche de travail et comprend des éléments de renfort filaires de travail s'étendant axialement d'un bord axial à l'autre bord axial de ladite couche de travail les uns sensiblement parallèlement aux autres.

De façon optionnelle, chaque élément de renfort filaire de travail s'étend selon une direction principale formant, avec la direction circonférentielle du pneumatique, un angle, en valeur absolue, strictement supérieur à 10°, de préférence allant de 15° à 50° et plus préférentiellement allant de 20° à 35°.

De façon préférée, dans les modes de réalisation dans lesquels l'armature de travail comprend une couche de travail radialement la plus intérieure et une couche de travail radialement la plus extérieure agencée radialement à l'extérieur de la couche radialement la plus intérieure, la direction principale selon laquelle s'étend chaque élément de renfort filaire de travail de la couche de travail radialement la plus intérieure et la direction principale selon laquelle s'étend chaque élément de renfort filaire de travail de la couche de travail radialement la plus extérieure forment, avec la direction circonférentielle du pneumatique, des angles d'orientations opposées.

De façon optionnelle, l'armature de sommet comprend une armature de frettage délimitée axialement par deux bords axiaux de l'armature de frettage et comprenant au moins un élément de renfort filaire de frettage enroulé circonférentiellement hélicoïdalement de façon à s'étendre axialement entre les bords axiaux de l'armature de frettage.

Conformément à l'invention, l'armature de frettage est agencée radialement à l'extérieur de l'armature de travail.

De façon préférée, le ou chaque élément de renfort filaire de frettage s'étend selon une direction principale formant, avec la direction circonférentielle du pneumatique, un angle, en valeur absolue, inférieur ou égal à 10°, de préférence inférieur ou égal à 7° et plus préférentiellement inférieur ou égal à 5°.

L'invention a également pour objet un ensemble monté comprenant :
- un support de montage comprenant une jante, et
- un pneumatique tel que défini ci-dessus monté sur la jante.

Avantageusement, l'armature de sommet étant agencée radialement entre la bande de roulement et l'armature de carcasse et comprenant une armature de travail comprenant au moins une couche de travail axialement la moins large, la couche de travail axialement la moins large présentant une largeur axiale T2 exprimée en mm, et la jante présentant une largeur de jante A selon le manuel de la norme ETRTO 2019, et exprimée en mm, le rapport T2/A est tel que T2/A ≤ 1,00.

Afin de maitriser les dissipations d'énergie et la température dans la structure lors du fonctionnement du pneumatique conforme à l'invention, il est préférable de dimensionner correctement la largeur axiale de la couche de travail axialement la moins large par rapport à la largeur de la jante. En effet, dans le cas d'une forte charge au-delà de celle connue de l'état de la technique, la flèche du pneumatique, c'est-à-dire la différence entre le rayon de l'ensemble monté en absence de charge et le rayon de l'ensemble monté sous cette charge, est considérablement augmentée. Cette augmentation de la flèche entraine une dissipation d'énergie et une élévation de la température relativement importantes dans la structure du pneumatique, notamment dans le bourrelet.

Afin de maitriser cela, on préfèrera rectifier le flanc du pneumatique, c'est-à-dire rendre le flanc plus droit selon la direction radiale, et ce dans le but d'augmenter la rigidité radiale du pneumatique pour éviter une trop forte flexion du pneumatique et l'augmentation de la dissipation d'énergie et de la température dans la structure du pneumatique. On préconise donc de réduire le rapport T2/A à une valeur inférieure ou égale à 1,00 afin:
- pour une largeur de jante A donnée, de réduire la largeur axiale T2 de la couche de travail axialement la moins large ce qui entraine une réduction de la largeur de l'aire de contact et donc une rectification radiale du flanc du pneumatique,
- pour une largeur axiale T2 de la couche de travail axialement la moins large donnée d'augmenter la largeur de jante A ce qui entraine également une rectification radiale du flanc du pneumatique.

Dans le cas où l'homme du métier fait varier la largeur axiale T2 de la couche de travail axialement la moins large, l'homme du métier adaptera les caractéristiques du sommet du pneumatique, notamment celles de l'armature de sommet comprenant l'armature de travail et une éventuelle armature de frettage, ainsi que celles de la bande de roulement en fonction de la largeur axiale T2 qu'il aura déterminée.

Dans les deux cas, on augmente la rigidité radiale du pneumatique, donc on réduit la flèche du pneumatique pour une charge donnée ce qui permet de compenser au moins en partie l'impact de l'augmentation de la charge et on réduit ainsi les contraintes exercées sur la structure du pneumatique et donc la dissipation d'énergie et l'élévation de température lors du fonctionnement du pneumatique.

Afin de limiter l'augmentation des masses en rotation sur le véhicule mais également afin de réduire l'encombrement de l'ensemble monté pour favoriser l'habitabilité et la compacité du véhicule, on privilégiera le fait de réduire la largeur axiale T2 de la couche de travail axialement la moins large plutôt que d'augmenter la largeur de jante A. La largeur axiale de la couche de travail axialement la moins large est mesurée sur une coupe de pneumatique dans un plan méridien et correspond à la largeur selon la direction axiale entre les deux extrémités axiales de la couche de travail.

De façon préférée, la couche de travail axialement la moins large est la couche de travail radialement extérieure de l'armature de travail.

Dans des modes de réalisation également avantageux, 0,85 ≤ T2/A, de préférence 0,90 ≤ T2/A, et plus préférentiellement 0,93 ≤ T2/A ≤ 0,97.

Il est préférable d'avoir un rapport T2/A qui ne soit pas trop petit. En effet, pour une largeur de jante A donnée, il est préférable de ne pas trop réduire la valeur de la largeur axiale T2 de la couche de travail axialement la moins large au risque de réduire la rigidité de flexion sur chants et donc la rigidité de dérive à forte dérive. En outre, en réduisant trop la valeur de la largeur axiale T2 de la couche de travail axialement la moins large, on réduit la largeur de l'aire de contact ce qui augmente la pression exercée sur la bande de roulement et donc l'usure, cette usure étant amplifiée par le fait que les pneumatiques selon l'invention sont destinés à porter des charges relativement élevées conduisant nécessairement à une usure élevée, en tous cas plus élevée que des pneumatiques de même dimension dans leur version EXTRA LOAD amenés à porter des charges moindres. Pour une largeur axiale T2 de la couche de travail axialement la moins large donnée, il est également préférable de ne pas trop augmenter la valeur de la largeur de jante A afin, comme expliqué ci-dessus, de limiter l'augmentation des masses en rotation sur le véhicule mais également afin de réduire l'encombrement de l'ensemble monté pour favoriser l'habitabilité et la compacité du véhicule.

Dans des modes de réalisation préférés, le pneumatique présente une largeur de section nominale SW telle que T2 ≥ SW - 75, de préférence T2 ≥ SW - 70. Pour une largeur de section nominale donnée, la couche de travail axialement la moins large qui définit principalement la largeur de l'aire de contact n'est pas trop réduite. En effet, comme expliqué ci-dessus, cela permet de conserver une bonne performance en usure du pneumatique et ce malgré le fait que les pneumatiques sont destinés à porter des charges relativement élevées conduisant nécessairement à une usure relativement élevée.

Dans des modes de réalisation préférés, le pneumatique présente une largeur de section nominale SW telle que T2 ≤ SW - 27, de préférence T2 ≤ SW - 30.

Dans ces modes de réalisation tout comme dans l'invention d'une manière générale, la largeur de section nominale est celle du marquage de la dimension inscrite sur le flanc du pneumatique.

De façon à réduire le risque de voir le pneumatique monté sur une jante dont la largeur de jante serait trop petite et entrainerait une flexion relativement forte de l'épaule du pneumatique, on préfèrera limiter les jantes utilisables avec le pneumatique. Ainsi, la jante est choisie parmi :
- une jante présentant un code de largeur de jante égal au code de largeur de la jante de mesure pour la dimension du pneumatique et définie selon le manuel de la norme ETRTO 2019, et
- une jante présentant un code de largeur de jante égal au code de largeur de la jante de mesure pour la dimension du pneumatique minoré de 0,5, et
- une jante présentant un code de largeur de jante égal au code de largeur de la jante de mesure pour la dimension du pneumatique majoré de 0,5.

La jante de mesure est notamment définie aux pages 20 à 41 de la partie Passenger Car Tyres - Tyres with Metric Designation du manuel de la norme ETRTO 2019.

De façon préférée, afin de limiter l'augmentation des masses en rotation sur le véhicule mais également afin de réduire l'encombrement de l'ensemble monté pour favoriser l'habitabilité et la compacité du véhicule, la jante présente un code de largeur de jante égal au code de largeur de la jante de mesure pour la dimension du pneumatique minoré de 0,5.

Avantageusement, le pneumatique est gonflé à une pression allant de 200 à 350 kPa, de préférence de 250 à 330 kPa. La pression est celle de l'ensemble monté à 25°C sans que le pneumatique n'ai roulé. Elle correspond souvent à une des pressions de gonflage recommandées par les constructeurs automobiles.

Dans des usages dans lesquels on souhaitera privilégier la capacité de charge du pneumatique, on utilisera une pression relativement élevée et supérieure ou égale à 270 kPa.

Dans des usages dans lesquels on souhaitera privilégier le confort des passagers et le comportement du véhicule, notamment l'adhérence sur sol sec, on utilisera une pression relativement faible et inférieure ou égale à 270 kPa.

L'invention a encore pour objet un véhicule de tourisme comprenant au moins un pneumatique ou un ensemble monté tel que défini ci-dessus.

L'invention sera mieux comprise à la lecture de la description qui va suivre, donnée uniquement à titre d'exemple non limitatif et faite en se référant aux dessins dans lesquels:
- la figure 1 est une vue, dans un plan de coupe méridien, d'un ensemble monté selon un premier mode de réalisation de l'invention,
- la figure 2 est une vue, dans un plan de coupe méridien, du pneumatique de l'ensemble monté de la figure 1,
- la figure 3 est une vue en coupe selon le plan III-III' de la figure 2 illustrant l'armature de carcasse du pneumatique de la figure 1, et
- la figure 4 est une vue analogue à celle de la figure 1 comparant la flèche d'un ensemble monté de l'état de la technique et celle de l'ensemble monté de la figure 1.

Sur les figures, on a représenté un repère X, Y, Z correspondant aux directions habituelles respectivement axiale (Y), radiale (Z) et circonférentielle (X) d'un pneumatique ou d'un ensemble monté.

Dans la description qui suit, les mesures réalisées sont réalisées sur un pneumatique non chargé et non gonflé ou sur une coupe de pneumatique dans un plan méridien.

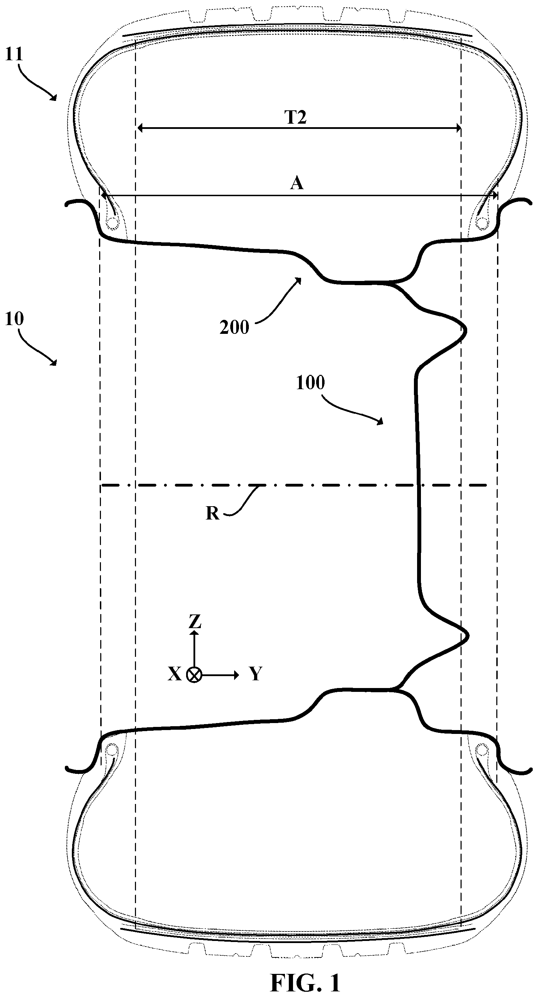

On a représenté sur la figure 1 un ensemble monté conforme à l'invention et désigné par la référence générale 10. L'ensemble monté 10 comprend un pneumatique 11 et un support de montage 100 comprenant une jante 200. Le pneumatique 11 est ici gonflé à une pression allant de 200 à 350 kPa, de préférence de 250 à 330 kPa et ici égale à 270 kPa.

Le pneumatique 11 présente une forme sensiblement torique autour d'un axe de révolution R sensiblement parallèle à la direction axiale Y. Le pneumatique 11 est destiné à un véhicule de tourisme. Sur les différentes figures, le pneumatique 11 est représenté à l'état neuf, c'est-à-dire n'ayant pas encore roulé.

Le pneumatique 11 comprend deux flancs 30 portant un marquage indiquant la dimension du pneumatique 11, ainsi qu'un indice de vitesse et un code de vitesse. En l'espèce, le pneumatique 11 présente une largeur de section nominale SW allant de 225 à 315, de préférence allant de 245 à 315 et ici égale à 225. Le pneumatique 11 présente également un rapport d'aspect nominal AR allant de 25 à 55 et ici égal à 55. Le pneumatique 11 présente un diamètre de jante nominale allant de 18 à 23 et ici égal à 18. Le pneumatique 11 présente donc une hauteur de flanc H définie par SW x AR / 100 =124 ≥ 95, de préférence H ≥ 100.

Conformément à l'invention, le marquage comprend également un indice de charge LI allant de 98 à 116, tel que LI ≥ LI'+1 avec LI' étant l'indice de charge d'un pneumatique EXTRA LOAD présentant la même dimension selon le manuel de la norme ETRTO 2019. De préférence, LI'+1 ≤ LI ≤ LI'+4, et même LI'+2 ≤ LI ≤ LI'+4.

Un pneumatique présentant une dimension 225/55R18 dans sa version EXTRA LOAD présente un indice de charge égal à 102 comme cela est indiqué à la page 28 de la partie Passenger Car Tyres - Tyres with Metric Designation du manuel de la norme ETRTO 2019. Ainsi, l'indice de charge LI du pneumatique 11 est tel que LI ≥103, de préférence 103 ≤ LI ≤ 106 et même 104 ≤ LI ≤ 106 et ici LI=105. Cet indice de charge égal à 105 correspond bien à l'indice de charge d'un pneumatique HIGH LOAD CAPACITY de dimension 225/55R18 comme cela est indiqué dans le manuel ETRTO 2021. Ainsi, le pneumatique 11 est bien du type HIGH LOAD CAPACITY.

Pour une telle dimension, le manuel de la norme ETRTO 2019 indique, page 28 de la partie Passenger Car Tyres - Tyres with Metric Designation, une jante de mesure présentant un code de largeur de jante égal à 7. La jante 200 de l'ensemble monté 10 est ainsi choisie parmi :
- une jante présentant un code de largeur de jante égal au code de largeur de la jante de mesure pour la dimension du pneumatique et définie selon le manuel de la norme ETRTO 2019, et
- une jante présentant un code de largeur de jante égal au code de largeur de la jante de mesure pour la dimension du pneumatique minoré de 0,5, et
- une jante présentant un code de largeur de jante égal au code de largeur de la jante de mesure pour la dimension du pneumatique majoré de 0,5.

Ici, la jante 200 de l'ensemble monté 10 est la jante présentant un code de largeur de jante égal au code de largeur de la jante de mesure pour la dimension du pneumatique minoré de 0,5 et donc ici égal à 6,5. La jante 200 présente un profil de type J et une largeur de jante A selon le manuel de la norme ETRTO 2019. En l'espèce, le profil de la jante 200 étant du type 6,5 J, sa largeur de jante A exprimée en mm est égale à 165,10 mm.

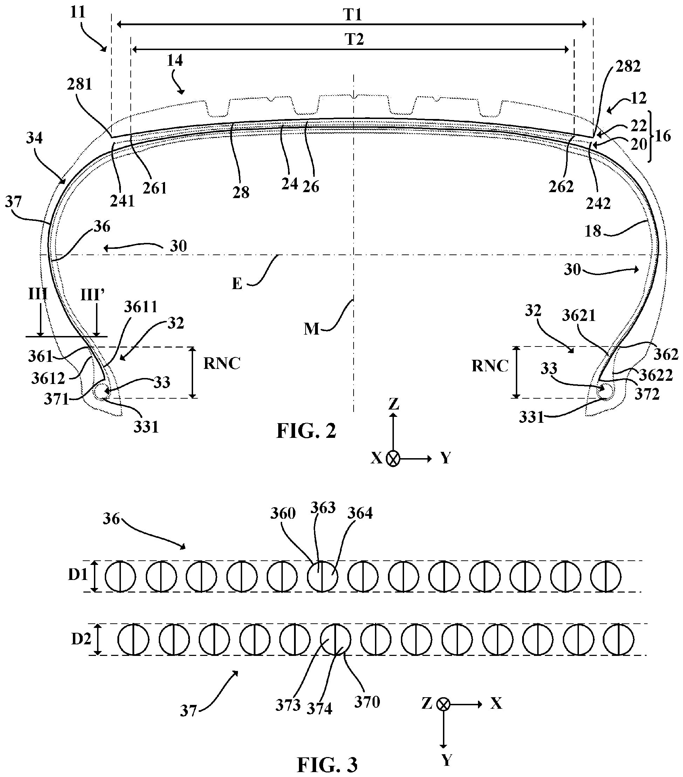

En référence à la figure 2, le pneumatique 11 comprend un sommet 12 comprenant une bande de roulement 14 destinée à entrer en contact avec un sol lors du roulage et une armature de sommet 16 s'étendant dans le sommet 12 selon la direction circonférentielle X. Le pneumatique 11 comprend également une couche d'étanchéité 18 à un gaz de gonflage étant destinée à délimiter une cavité interne fermée avec le support de montage 100 du pneumatique 11 une fois le pneumatique 11 monté sur le support de montage 100.

L'armature de sommet 16 comprend une armature de travail 20 et une armature de frettage 22. L'armature de travail 16 comprend au moins une couche de travail et ici comprend deux couches de travail comprenant une couche de travail 24 radialement intérieure agencée radialement à l'intérieur d'une couche de travail 26 radialement extérieure. Parmi les deux couches radialement intérieure 24 et radialement extérieure 26, la couche axialement la moins large est la couche radialement extérieure 26.

L'armature de frettage 22 comprend au moins une couche de frettage et comprend ici une couche de frettage 28.

L'armature de sommet 16 est surmontée radialement de la bande de roulement 14. Ici, l'armature de frettage 22, ici la couche de frettage 28, est agencée radialement à l'extérieur de l'armature de travail 20 et est donc radialement intercalée entre l'armature de travail 20 et la bande de roulement 14.

Les deux flancs 30 prolongent le sommet 12 radialement vers l'intérieur. Le pneumatique 11 comporte en outre deux bourrelets 32 radialement intérieurs aux flancs 30. Chaque flanc 30 relie chaque bourrelet 32 au sommet 12.

Le pneumatique 11 comprend une armature de carcasse 34 ancrée dans chaque bourrelet 32, en l'espèce forme un enroulement autour d'un élément de renforcement circonférentiel 33, ici une tringle. L'armature de carcasse 34 s'étend radialement dans chaque flanc 30 et axialement dans le sommet 12, radialement intérieurement à l'armature de sommet 16. L'armature de sommet 16 est agencée radialement entre la bande de roulement 14 et l'armature de carcasse 34. L'armature de carcasse 34 comprend au moins une couche de carcasse 36 et ici des première et deuxième couches de carcasse 36, 37. Chaque première et deuxième couche de carcasse 36, 37 s'étend dans chaque flanc 30 et dans le sommet 12 radialement intérieurement à l'armature de sommet 16.

L'armature de frettage 22, ici la couche de frettage 28, est délimitée axialement par deux bords axiaux 281, 282 et comprend un ou plusieurs éléments de renfort filaires de frettage enroulés circonférentiellement hélicoïdalement entre chaque bord axial 281, 282 selon une direction principale formant, avec la direction circonférentielle X du pneumatique 10, un angle AF, en valeur absolue, inférieur ou égal à 10°, de préférence inférieur ou égal à 7° et plus préférentiellement inférieur ou égal à 5°. Ici, AF=-5°.

Chaque couche de travail radialement intérieure 24 et radialement extérieure 26 est délimitée axialement par deux bords axiaux respectivement 241, 242, 261, 262 de chaque couche de travail 24, 26. La couche de travail radialement intérieure 24 présente une largeur axiale T1=174,00 mm et la couche de travail radialement extérieure 26 présente une largeur axiale T2=160,00 mm faisant de la couche de travail radialement extérieure 26 la couche de travail axialement la moins large.

On notera que SW=225 et T2=160 satisfont les relations suivantes T2 ≥ SW - 75, de préférence T2 ≥ SW - 70 et T2 ≤ SW - 27, de préférence T2 ≤ SW - 30.

Comme cela est illustré sur la figure 1, l'ensemble monté 10 est tel que le pneumatique 11 présente des flancs rectifiés radialement. En effet, le rapport T2/A est tel que 0,85 ≤ T2/A ≤ 1,00, de préférence 0,90 ≤ T2/A ≤ 1,00, et plus préférentiellement 0,93 ≤ T2/A ≤ 0,97 et ici T2/A=0,97.

Chaque couche de travail 24, 26 comprend des éléments de renfort filaires de travail s'étendant axialement d'un bord axial 241, 261 à l'autre bord axial 242, 262 de chaque couche de travail 24, 26 les uns sensiblement parallèlement aux autres selon des directions principales formant avec la direction circonférentielle X du pneumatique 10, des angles respectivement AT1 et AT2 d'orientations opposées et en valeur absolue, strictement supérieurs à 10°, de préférence allant de 15° à 50° et plus préférentiellement allant de 20° à 35°. Ici, AT1=-26° et AT2=+26°.

Chaque première et deuxième couche de carcasse 36, 37 est délimitée axialement par deux bords axiaux respectivement 361, 362, 371, 372 et comprend des éléments de renfort filaires textiles de carcasse respectivement 360, 370 s'étendant axialement d'un bord axial 361, 371 à l'autre bord axial 362, 372 selon une direction principale D3 formant avec la direction circonférentielle X du pneumatique 10, un angle AC, en valeur absolue, allant de 80° à 90° et ici AC=+90°.

La première couche de carcasse 36 forme un enroulement autour de chaque élément de renforcement circonférentiel 33 de chaque bourrelet 32 de sorte qu'une portion axialement intérieure 3611, 3621 de la première couche de carcasse 36 est agencée axialement à l'intérieur d'une portion axialement extérieure 3612, 3622 de la première couche de carcasse 36 et de sorte que chaque extrémité axiale 361, 362 de la première couche de carcasse 36 soit agencée radialement à l'extérieur de chaque élément de renforcement circonférentiel 33. Chaque extrémité axiale 371, 372 de la deuxième couche de carcasse 37 est agencée radialement à l'intérieur de chaque extrémité axiale de la première couche 361, 362 et est agencée axialement entre les portions axialement intérieure et extérieure 3611, 3612 et 3621, 3622 de la première couche de carcasse 36.

Chaque extrémité axiale 361, 362 de la première couche de carcasse 36 est agencée radialement à l'intérieur de l'équateur E du pneumatique. Plus précisément, chaque extrémité axiale 361, 362 de la première couche de carcasse 36 est agencée à une distance radiale RNC inférieure ou égale à 30 mm d'une extrémité radialement intérieure 331 de chaque élément de renforcement circonférentiel 33 de chaque bourrelet 32. Ici RNC=23 mm.

Chaque couche de travail 24, 26, de frettage 28 et de carcasse 36 comprend une matrice de calandrage des éléments de renfort filaires de la couche correspondante. De préférence la matrice de calandrage est polymérique et plus préférentiellement élastomérique comme celles usuellement utilisées dans le domaine des pneumatiques.

Chaque élément de renfort filaire de frettage comprend classiquement deux brins multifilamentaires, chaque brin multifilamentaire étant constitué d'un filé de monofilaments de polyamide aliphatique, ici de nylon d'un titre égal à 140 tex, ces deux brins multifilamentaires étant mis en hélice individuellement à 250 tours par mètre dans un sens puis mis en hélice ensemble à 250 tours par mètre dans le sens opposé. Ces deux brins multifilamentaires sont enroulés en hélice l'un autour de l'autre. En variante, on pourra utiliser un élément de renfort filaire de frettage comprenant un brin multifilamentaire constitué d'un filé de monofilaments de polyamide aliphatique, ici de nylon d'un titre égal à 140 tex et un brin multifilamentaire constitué d'un filé de monofilaments de polyamide aromatique, ici d'aramide d'un titre égal à 167 tex, ces deux brins multifilamentaires étant mis en hélice individuellement à 290 tours par mètre dans un sens puis mis en hélice ensemble à 290 tours par mètre dans le sens opposé. Ces deux brins multifilamentaires sont enroulés en hélice l'un autour de l'autre. Dans encore une autre variante, on pourra utiliser un élément de renfort filaire de frettage comprenant deux brins multifilamentaires constitués chacun d'un filé de monofilaments de polyamide aromatique, ici d'aramide d'un titre égal à 330 tex et un brin multifilamentaire constitué d'un filé de monofilaments de polyamide aliphatique, ici de nylon d'un titre égal à 188 tex, chacun des brins multifilamentaires étant mis en hélice individuellement à 270 tours par mètre dans un sens puis mis en hélice ensemble à 270 tours par mètre dans le sens opposé. Ces trois brins multifilamentaires sont enroulés en hélice l'un autour de l'autre.

D'une manière générale, l'utilisation d'une forte charge entraine une diminution de la vitesse limite acceptable du pneumatique ainsi qu'une dégradation de son comportement, par exemple sa rigidité de dérive. Ainsi, en utilisant un ou des éléments de renfort filaires de frettage à haut module, par exemple comme ceux décrits dans les deux dernières variantes ci-dessus comprenant un ou plusieurs brins de polyamide aromatique, on peut augmenter la vitesse limite acceptable par le pneumatique et améliorer le comportement, notamment sa rigidité de dérive.

Chaque élément de renfort filaire de travail est un assemblage 4.26 de quatre monofilaments en acier et comprenant une couche interne de deux monofilaments et une couche externe de deux monofilaments enroulés ensemble en hélice autour de la couche interne au pas de 14,0 mm, par exemple dans le sens S. Un tel assemblage 4.26 présente une fore à rupture égale à 640 N, un diamètre égal à 0,7 mm. Chaque monofilament en acier présente un diamètre égal à 0,26 mm et une résistance mécanique égale à 3250 MPa. En variante, on pourra également utiliser un assemblage de six monofilaments en acier présentant un diamètre égal à 0,23 mm et comprenant une couche interne de deux monofilaments enroulés ensemble en hélice au pas de 12,5 mm dans un premier sens, par exemple le sens Z, et une couche externe de quatre monofilaments enroulés ensemble en hélice autour de la couche interne au pas de 12,5 mm dans un deuxième sens opposé au premier sens, par exemple le sens S.

Comme cela est représenté sur la figure 3, chaque élément de renfort filaire textile de carcasse 360, 370 de chaque première et deuxième couche de carcasse 36, 37 comprend un assemblage d'au moins deux brins multifilamentaires 363, 364 et 373, 374. Chaque brin multifilamentaire 363, 364, 373, 374 est choisi parmi un brin multifilamentaire de polyester, un brin multifilamentaire de polyamide aromatique et un brin multifilamentaire de polyamide aliphatique, de préférence choisi parmi un brin multifilamentaire de polyester et un brin multifilamentaire de polyamide aromatique. En l'espèce, l'assemblage est choisi parmi un assemblage de deux brins multifilamentaires de polyester et un assemblage d'un brin multifilamentaire de polyester et d'un brin multifilamentaire de polyamide aromatique et ici est constitué de deux brins multifilamentaires de PET, ces deux brins multifilamentaires étant mis en hélice individuellement à 420 tours par mètre dans un sens puis mis en hélice ensemble à 420 tours par mètre dans le sens opposé. Chacun de ces brins multifilamentaires présente un titre égal à 114 tex de sorte que le titre total de l'assemblage soit inférieur ou égal à 475 tex et ici égal à 228 tex.

Chaque élément de renfort filaire textile de carcasse 360, 370 présente un diamètre moyen respectivement D1, D2, exprimé en mm tel que D1 ≤ 0,90 mm et D2 ≤ 0,90 mm, de préférence D1 ≤ 0,85 mm et D2 ≤ 0,85 mm et plus préférentiellement D1 ≤ 0,75 mm et D2 ≤ 0,75 mm et tel que D1 ≥ 0,55 mm et D2 ≥ 0,55 mm, de préférence D1 ≥ 0,60 mm et D2 ≥ 0,60 mm. Ici, D1=D2=0,62 mm.

On va maintenant décrire un pneumatique selon un deuxième mode de réalisation de l'invention.

A la différence du premier mode de réalisation, le pneumatique selon le deuxième mode de réalisation présente une largeur de section nominale SW égale à 255, un rapport d'aspect nominal AR égal à 40, un diamètre de jante nominale égal à 21 et une hauteur de flanc H définie par SW x AR / 100 =102 qui est supérieure ou égale à 95. Un pneumatique présentant une dimension 255/40R21 dans sa version EXTRA LOAD présente un indice de charge égal à 102 comme cela est indiqué à la page 34 de la partie Passenger Car Tyres - Tyres with Metric Designation du manuel de la norme ETRTO 2019. Ainsi, l'indice de charge LI du pneumatique selon le deuxième mode de réalisation est tel que LI ≥103, de préférence 103 ≤ LI ≤ 106 et même 104 ≤ LI ≤ 106 et ici LI=105. Cet indice de charge égal à 105 correspond bien à l'indice de charge d'un pneumatique de type HIGH LOAD CAPACITY de dimension 255/40R21 comme cela est indiqué dans le manuel ETRTO 2021. Ainsi, le pneumatique selon le deuxième mode de réalisation est bien du type HIGH LOAD CAPACITY.

A la différence du pneumatique selon le premier mode de réalisation, le pneumatique selon le deuxième mode de réalisation est tel que 0,88 ≤ H/LI ≤ 0,98 et ici H/LI=0,97.

### TESTS COMPARATIFS

### Simulation de mise en tension

Afin de démontrer l'intérêt de l'invention, les inventeurs ont simulé la tension de chaque élément de renfort filaire de carcasse plusieurs pneumatiques.

Pour chacun de ces tests, on a simulé la tension de chaque élément de renfort filaire de carcasse pour des pneumatiques gonflés à une pression égale à 2,8 bars et soumis à une charge bien plus importante que celle utilisée pour l'essai de performance charge/vitesse décrit en annexe VII du Règlement n°30 de la CEE-ONU.

On a simulé différents pneumatiques présentant les dimensions suivantes 255/35 R20, 235/60 R18, 255/60 R18 de façon à ce que :
- le pneumatique présente une armature de carcasse comprenant des première et deuxième couches de carcasse conformément à l'invention (désignés par les références INV1, INV2) et dans lesquels chaque extrémité axiale de la deuxième couche de carcasse est agencée radialement à l'intérieur de chaque extrémité axiale de la première couche et est agencée axialement entre les portions axialement intérieure et extérieure de la première couche de carcasse (première configuration),
- le pneumatique présente une armature de carcasse comprenant des première et deuxième couches de carcasse conformément à l'invention (désignés par les références INV1', INV2') et dans lesquels chaque extrémité axiale de la deuxième couche de carcasse est agencée radialement à l'intérieur de chaque extrémité axiale de la première couche et est agencée axialement à l'extérieur de chaque portion axialement extérieure de la première couche de carcasse (deuxième configuration),
- le pneumatique comprend une armature de carcasse analogue à celles des pneumatiques INV1 et INV2 mais présente une hauteur de flanc H strictement inférieure à 95 (COMP0), et
- le pneumatique comprend une unique couche de carcasse (COMP1, COMP2) et présente une hauteur de flanc H strictement inférieure à 95 (COMP0'),

La tension de chaque élément de renfort filaire de carcasse est mesurée à l'extrémité de l'unique couche de carcasse pour les pneumatiques comprenant une unique couche de carcasse et à l'extrémité de la première couche de carcasse formant l'enroulement autour de l'élément de renforcement circonférentiel de chaque bourrelet pour les pneumatiques comprenant deux couches de carcasse.

On a rassemblé les résultats de ces simulations dans le tableau 1 ci-dessous.

**Tableau 1**

| Dimension | 255/35 R20 | 255/35 R20 | 235/60 R18 | 235/60 R18 | 235/60 R18 | 255/60 R18 | 255/60 R18 | 255/60 R18 |
|---|---|---|---|---|---|---|---|---|
| H | 89 | 89 | 141 | 141 | 141 | 153 | 153 | 153 |
| Désignation du pneumatique | COMP0 | COMP0' | INV1 | INV1' | COMP1 | INV2 | INV2' | COMP2 |
| Tension (daN) | 0,22 | 0,46 | 0.34 | 0,36 | 0.71 | 0.42 | 0.42 | 0.79 |

Tout d'abord, on montre que la tension des éléments de renfort filaires de carcasse est significativement réduite dans le cas de pneumatiques présentant des première et deuxième couches de carcasse contrairement aux pneumatiques comportant une unique couche de carcasse. Ainsi, grâce à l'utilisation de première et deuxième couches de carcasse, on maitrise la tension de l'armature de carcasse.

En outre, cette maitrise de la tension de l'armature de carcasse ne s'avère nécessaire que pour des pneumatiques présentant une hauteur de flanc supérieure ou égale à 95. En effet, la tension de l'armature de carcasse des pneumatiques présentant une hauteur de flanc strictement inférieure à 95 reste maitrisée, même dans le cas d'une armature de carcasse comprenant une unique couche de carcasse.

On note également que, pour un nombre de couche(s) de carcasse donné, la tension est d'autant plus élevée que le flanc est haut. Ainsi, si on souhaite réduire la mise en tension de l'armature de carcasse à un niveau raisonnable avec un agencement de l'armature de carcasse selon la première configuration, on limitera la hauteur de flanc aux valeurs inférieures ou égales à 155. Pour des hauteurs de flanc strictement supérieures à 155, on privilégiera, comme expliqué ci-dessus, un agencement de l'armature de carcasse selon la deuxième configuration de façon à réduire cette mise en tension.

### Simulation de tests de roulage

Afin de démontrer l'intérêt optionnel de l'agencement de l'armature de carcasse de la première configuration par rapport à la deuxième configuration pour des pneumatiques présentant une hauteur de flanc inférieure ou égale à 155, les inventeurs ont simulé le roulage de pneumatiques.

Pour chacun de ces tests on a simulé le roulage analogue à l'essai de performance charge/vitesse décrit en annexe VII du Règlement n°30 de la CEE-ONU, mais dans des conditions de charge et de pression encore plus sollicitantes. On a simulé différents pneumatiques présentant les dimensions suivantes 255/40 R21, 235/60 R18 et 255/60 R18 de façon à ce que :
- le pneumatique comprend un agencement de l'armature de carcasse conforme à la première configuration (désignés par les références INV1, INV2, INV3)
- les pneumatique comprend un agencement de l'armature de carcasse conforme à la deuxième configuration (désignés par les références INV1', INV2', INV3').

Lors de ces simulations, on a relevé le maximum de la dissipation d'énergie volumique DNRJ d'une portion des matrices de calandrage des première et deuxième couches de carcasse, cette portion étant située axialement entre les première et deuxième couches de carcasse et dans le flanc, exprimée en daN/mm2. Plus cette valeur est élevée, plus la dissipation d'énergie par la structure du pneumatique est élevée et plus l'élévation de température est importante. On a rassemblé les résultats de ces simulations dans le tableau 2 ci-dessous.

**Tableau 2**

| Dimension | 255/40 R21 | 255/40 R21 | 235/60 R18 | 235/60 R18 | 255/60 R18 | 255/60 R18 |
|---|---|---|---|---|---|---|
| H | 102 | 102 | 141 | 141 | 153 | 153 |
| Désignation du pneumatique | INV3 | INV3' | INV1 | INV1' | INV2 | INV2' |
| DNRJ | 0.038 | 0.06 | 0.005 | 0.009 | 0.005 | 0.01 |

On note que l'agencement de l'armature de carcasse selon la première configuration est avantageux pour réduire la dissipation d'énergie et qu'un agencement de l'armature de carcasse selon la deuxième configuration ne permet pas de réduire autant la dissipation d'énergie. Cela est particulièrement avantageux pour des hauteurs de flancs H ≤ 130, de préférence H ≤ 120 et plus préférentiellement H ≤ 110. En effet, pour de telles hauteurs de flancs, le maximum de la dissipation d'énergie volumique DNRJ étant relativement élevé, l'utilisation de l'agencement de l'armature de carcasse selon la première configuration permet de réduire la dissipation d'énergie de façon significative à un niveau acceptable en valeur absolue.

Même si pour des hauteurs de flancs supérieures à 130, la dissipation d'énergie est, en valeur absolue, moindre que pour des hauteurs de flancs inférieures ou égales à 130, l'agencement de l'armature de carcasse selon la première configuration permet néanmoins de réduire cette dissipation d'environ 50%.

### Test statique

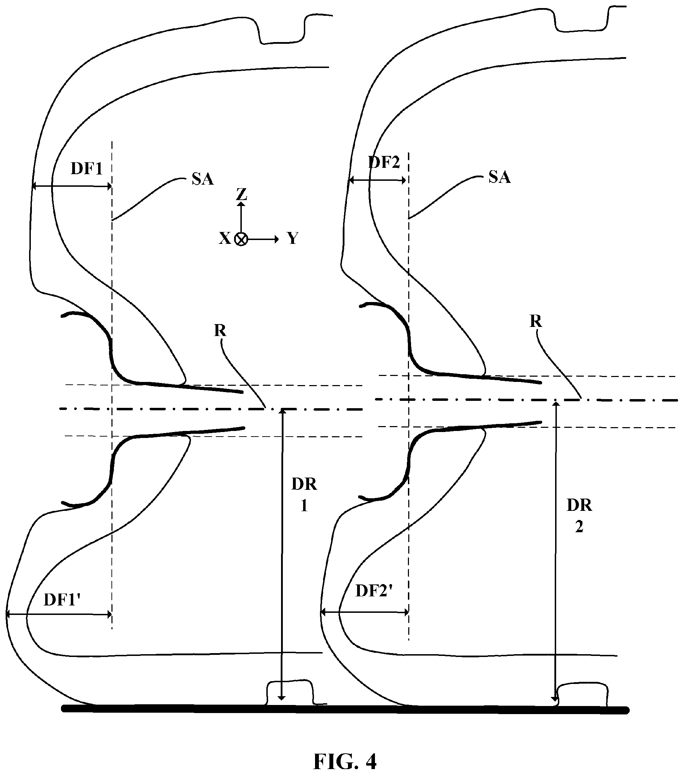

Afin d'illustrer l'effet de la rectification des flancs, qui, bien qu'avantageuse est optionnelle dans le cadre de l'invention, on a illustré sur la figure 4 le résultat d'un test statique d'écrasement d'un pneumatique de dimension 225/55R18 identique à celui décrit précédemment mais dans lequel le rapport T2/A est égal à 1,05 (pneumatique illustré à gauche) et le pneumatique décrit précédemment dont le rapport T2/A est égal à 0,97 (pneumatique illustré à droite). La charge appliquée sur chaque pneumatique est égale à 925 kg à une pression de 250 kPa.

On note que la flèche du pneumatique de gauche est bien supérieure à la flèche du pneumatique de droite. En effet, la distance DR1 de l'axe de rotation R au sol du pneumatique de gauche est inférieure à la distance DR2 de l'axe de rotation R au sol du pneumatique de droite.

On note en particulier que les flancs du pneumatique de droite sont radialement plus droits que les flancs du pneumatique de gauche. Cela est visible en comparant, à une même cote radiale de chaque flanc, les distances DF1 et DF2 entre la surface extérieure du flanc situé à l'opposé de l'aire de contact et le plan perpendiculaire SA à l'axe de rotation R du pneumatique et passant par la face d'appui de la jante délimitant la largeur axiale A de la jante. On peut également constater cela en comparant, à une même cote radiale de chaque flanc situé au droit de l'aire de contact, les distances DF1' et DF2' entre la surface extérieure du flanc et le plan perpendiculaire SA. On observe que DF1>DF2 et que DF1'>DF2'.

## Revendications

1. Pneumatique (11) pour véhicule de tourisme comprenant un sommet (12), deux bourrelets (32), deux flancs (30) reliant chacun chaque bourrelet (32) au sommet (12) et une armature de carcasse (34) ancrée dans chaque bourrelet (32), le sommet (12) comprenant une armature de sommet (16) et une bande de roulement (14), l'armature de carcasse (34) s'étendant dans chaque flanc (30) et dans le sommet (12) radialement intérieurement à l'armature de sommet (16), l'armature de carcasse (34) comprend des première et deuxième couches de carcasse (36, 37),le pneumatique (11) présente une hauteur de flanc H définie par H=SW x AR / 100 avec SW la largeur de section nominale et AR le rapport d'aspect nominal du pneumatique selon le manuel de la norme ETRTO 2019 telle que H ≥ 95,
**caractérisé en ce que** l'armature de sommet (16) comprend une armature de travail (20) comprenant une couche de travail radialement intérieure (24) et une couche de travail radialement extérieure (26) agencée radialement à l'extérieur de la couche de travail radialement intérieure (24), **en ce que** l'armature de sommet (16) comprenant une armature de frettage (22) agencée radialement à l'extérieur de l'armature de travail, **en ce que** le pneumatique (11) présente un indice de charge LI tel que LI ≥ LI'+1 et LI' étant l'indice de charge d'un pneumatique EXTRA LOAD présentant la même dimension selon le manuel de la norme ETRTO 2019, **en ce que** 0,88 ≤ H/LI ≤ 0,98 et **en ce que** le pneumatique présente une largeur de section nominale SW allant de 225 à 315, un rapport d'aspect nominal allant de 25 à 55, un diamètre de jante nominale allant de 18 à 23 et un indice de charge LI allant de 98 à 116.

2. Pneumatique (11) selon la revendication précédente, dans lequel LI'+1 ≤ LI ≤ LI'+4, de préférence LI'+2 ≤ LI ≤ LI'+4.

3. Pneumatique (11) selon l'une quelconque des revendications précédentes, dans lequel chaque première et deuxième couche de carcasse (36, 37) est délimitée axialement par deux bords axiaux (361, 362, 371, 372) de la couche de carcasse (36, 37) et comprend des éléments de renfort filaires textiles (360, 370) de carcasse s'étendant axialement d'un bord axial à l'autre bord axial de la couche de carcasse (36, 37) selon une direction principale formant, avec la direction circonférentielle (X) du pneumatique (11) un angle allant, en valeur absolue, de 80° à 90°.

4. Pneumatique (11) selon l'une quelconque des revendications précédentes, présentant une largeur de section nominale SW allant de 245 à 315, un rapport d'aspect nominal allant de 30 à 45, un diamètre de jante nominale allant de 18 à 23 et un indice de charge LI allant de 98 à 116.

5. Pneumatique (11) selon l'une quelconque des revendications précédentes, présentant une dimension et un indice de charge LI choisi parmi les dimensions et les indices de charge suivants: 225/55R18 105, 225/55ZR18 105, 205/55R19 100, 205/55ZR19 100, 235/45R21 104, 235/45ZR21 104, 285/45R22 116, 285/45ZR22 116, 245/40R19 101, 245/40ZR19 101, 255/40R20 104, 255/40ZR20 104, 245/40R21 103, 245/40ZR21 103, 255/40R21 105, 255/40ZR21 105, 265/40R21 108, 265/40ZR21 108, 255/40R22 106, 255/40ZR22 106, 275/35R21 105, 275/35ZR21 105, 285/35R21 108, 285/35ZR21 108, 295/35R22 111, 295/35ZR22 111, 275/35R23 108, 275/35ZR23 108, 325/30R21 111, 325/30ZR21 111.

6. Pneumatique (11) selon l'une quelconque des revendications précédentes, dans lequel chaque couche de travail (24, 26) est délimitée axialement par deux bords axiaux (241, 242, 261, 262) de ladite couche de travail (24, 26) et comprend des éléments de renfort filaires de travail s'étendant axialement d'un bord axial à l'autre bord axial de ladite couche de travail (24, 26) les uns sensiblement parallèlement aux autres.

7. Pneumatique (11) selon la revendication précédente, dans lequel chaque élément de renfort filaire de travail s'étend selon une direction principale formant, avec la direction circonférentielle (X) du pneumatique (11), un angle, en valeur absolue, strictement supérieur à 10°, de préférence allant de 15° à 50° et plus préférentiellement allant de 20° à 35°.

8. Pneumatique (11) selon l'une quelconque des revendications précédentes, dans lequel l'armature de frettage (22) est délimitée axialement par deux bords axiaux (281, 282) de l'armature de frettage et comprend au moins un élément de renfort filaire de frettage enroulé circonférentiellement hélicoïdalement de façon à s'étendre axialement entre les bords axiaux (281, 282) de l'armature de frettage (22).

9. Ensemble monté (10) comprenant :
- un support de montage (100) comprenant une jante (200), et
- un pneumatique (11) selon l'une quelconque des revendications précédentes monté sur la jante (200).

10. Ensemble monté (10) selon la revendication précédente, dans lequel, l'armature de sommet (16) étant agencée radialement entre la bande de roulement (14) et l'armature de carcasse (34) et comprenant une armature de travail (20) comprenant au moins une couche de travail axialement la moins large (26), la couche de travail axialement la moins large (26) présentant une largeur axiale T2 exprimée en mm, et la jante (200) présentant une largeur de jante A selon le manuel de la norme ETRTO 2019, et exprimée en mm, le rapport T2/A est tel que T2/A ≤ 1,00, de préférence 0,85 ≤ T2/A ≤ 0,97, plus préférentiellement 0,90 ≤ T2/A ≤ 0,97 et très préférentiellement 0,93 ≤ T2/A ≤ 0,97.

11. Utilisation d'un pneumatique (11) selon l'une quelconque des revendications 1 à 8, pour que le pneumatique (11) soit monté sur un véhicule ayant une motorisation hybride ou électrique.

12. Véhicule de tourisme comprenant au moins un pneumatique (11) selon l'une quelconque des revendications 1 à 8 ou un ensemble monté (10) selon la revendication 9 ou 10, véhicule de tourisme de préférence ayant une motorisation électrique ou hybride.

## Patentansprüche

1. Reifen (11) für einen Personenkraftwagen, umfassend einen Gürtel (12), zwei Wülste (32), zwei Seitenwände (30), die jeweils jeden Wulst (32) mit dem Gürtel (12) verbinden, und eine Karkassenverstärkung (34), die in jedem Wulst (32) verankert ist, wobei der Gürtel (12) eine Gürtelverstärkung (16) und einen Laufstreifen (14) umfasst, wobei sich die Karkassenverstärkung (34) in jeder Seitenwand (30) und in dem Gürtel (12) radial innerhalb der Gürtelverstärkung (16) erstreckt, wobei die Karkassenverstärkung (34) erste und zweite Karkassenlagen (36, 37) umfasst, wobei der Reifen (11) eine Seitenwandhöhe H aufweist, die durch H=SW x AR / 100 definiert ist, wobei SW die Nennquerschnittsbreite und AR das Nennseitenverhältnis des Reifens gemäß dem ETRTO Standards Manual 2019 ist, sodass H ≥ 95,
**dadurch gekennzeichnet, dass** die Gürtelverstärkung (16) eine Arbeitsverstärkung (20) umfasst, die eine radial innere Arbeitslage (24) und eine radial äußere Arbeitslage (26), die radial außerhalb der radial inneren Arbeitslage (24) angeordnet ist, umfasst, dass die Gürtelverstärkung (16) eine Umreifungsverstärkung (22) umfasst, die radial außerhalb der Arbeitsverstärkung angeordnet ist, dass der Reifen (11) einen Lastindex LI aufweist, so dass LI ≥ LI'+1, wobei LI' der Lastindex eines EXTRA LOAD-Reifens mit der gleichen Größe gemäß dem ETRTO Standards Manual 2019 ist, dass 0,88 ≤ H/LI ≤ 0,98 und dass der Reifen eine Nennquerschnittsbreite SW von 225 bis 315, ein Nennseitenverhältnis von 25 bis 55, einen Nennfelgendurchmesser von 18 bis 23 und einen Lastindex LI von 98 bis 116 aufweist.

2. Reifen (11) nach dem vorhergehenden Anspruch, wobei LI'+1 ≤ LI ≤ LI'+4, vorzugsweise LI'+2 ≤ LI ≤ LI'+4.

3. Reifen (11) nach einem der vorhergehenden Ansprüche, wobei jede erste und zweite Karkassenlage (36, 37) axial durch zwei axiale Ränder (361, 362, 371, 372) der Karkassenlage (36, 37) begrenzt wird und textile fadenförmige Karkassenverstärkungselemente (360, 370) umfasst, die sich axial von einem axialen Rand zu dem anderen axialen Rand der Karkassenlage (36, 37) entlang einer Hauptrichtung erstrecken, die mit der Umfangsrichtung (X) des Reifens (11) einen Winkel bildet, der betragsmäßig zwischen 80° und 90° liegt.

4. Reifen (11) nach einem der vorhergehenden Ansprüche, der eine Nennquerschnittsbreite SW von 245 bis 315, ein Nennseitenverhältnis von 30 bis 45, einen Nennfelgendurchmesser von 18 bis 23 und einen Lastindex LI von 98 bis 116 aufweist.

5. Reifen (11) nach einem der vorhergehenden Ansprüche, der eine Größe und einen Lastindex LI aufweist, die aus den folgenden Größen und Lastindizes ausgewählt sind: 225/55R18 105, 225/55ZR18 105, 205/55R19 100, 205/55ZR19 100, 235/45R21 104, 235/45ZR21 104, 285/45R22 116, 285/45ZR22 116, 245/40R19 101, 245/40ZR19 101, 255/40R20 104, 255/40ZR20 104, 245/40R21 103, 245/40ZR21 103, 255/40R21 105, 255/40ZR21 105, 265/40R21 108, 265/40ZR21 108, 255/40R22 106, 255/40ZR22 106, 275/35R21 105, 275/35ZR21 105, 285/35R21 108, 285/35ZR21 108, 295/35R22 111, 295/35ZR22 111, 275/35R23 108, 275/35ZR23 108, 325/30R21 111, 325/30ZR21 111.

6. Reifen (11) nach einem der vorhergehenden Ansprüche, wobei jede Arbeitslage (24, 26) axial durch zwei axiale Ränder (241, 242, 261, 262) der Arbeitslage (24, 26) begrenzt wird und fadenförmige Arbeitsverstärkungselemente umfasst, die sich axial von einem axialen Rand zu dem anderen axialen Rand der Arbeitslage (24, 26) erstrecken und im Wesentlichen parallel zueinander sind.

7. Reifen (11) nach dem vorhergehenden Anspruch, wobei sich jedes fadenförmige Arbeitsverstärkungselement entlang einer Hauptrichtung erstreckt, die mit der Umfangsrichtung (X) des Reifens (11) einen Winkel bildet, der betragsmäßig strikt größer als 10° ist, vorzugsweise zwischen 15° und 50° und noch bevorzugter zwischen 20° und 35° liegt.

8. Reifen (11) nach einem der vorhergehenden Ansprüche, wobei die Umreifungsverstärkung (22) axial durch zwei axiale Ränder (281, 282) der Umreifungsverstärkung begrenzt wird und mindestens ein fadenförmiges Umreifungsverstärkungselement umfasst, das umfänglich schraubenförmig gewickelt ist, so dass es sich axial zwischen den axialen Rändern (281, 282) der Umreifungsverstärkung (22) erstreckt.

9. Montierte Anordnung (10), umfassend:
- einen Montageträger (100), der eine Felge (200) umfasst, und
- einen Reifen (11) nach einem der vorhergehenden Ansprüche, der auf der Felge (200) montiert ist.

10. Montierte Anordnung (10) nach dem vorhergehenden Anspruch, wobei, wenn die Gürtelverstärkung (16) radial zwischen dem Laufstreifen (14) und der Karkassenverstärkung (34) angeordnet ist und eine Arbeitsverstärkung (20) umfasst, die mindestens eine axial am wenigsten breite Arbeitslage (26) umfasst, die axial am wenigsten breite Arbeitslage (26) eine in mm ausgedrückte axiale Breite T2 aufweist und die Felge (200) eine in mm ausgedrückte Felgenbreite A gemäß dem ETRTO Standards Manual 2019 aufweist, das Verhältnis T2/A derart ist, dass T2/A ≤ 1,00, vorzugsweise 0,85 ≤ T2/A ≤ 0,97, noch bevorzugter 0,90 ≤ T2/A ≤ 0,97 und besonders bevorzugt 0,93 ≤ T2/A ≤ 0,97.

11. Verwendung eines Reifens (11) nach einem der Ansprüche 1 bis 8, damit der Reifen (11) an einem Fahrzeug montiert wird, das einen Elektro- oder Hybridantrieb besitzt.

12. Personenkraftwagen, der mindestens einen Reifen (11) nach einem der Ansprüche 1 bis 8 oder eine montierte Anordnung (10) nach Anspruch 9 oder 10 umfasst, wobei der Personenkraftwagen vorzugsweise einen Elektro- und Hybridantrieb besitzt.

## Claims

1. Tyre (11) for a passenger car comprising a crown (12), two beads (32), two sidewalls (30) each connecting each bead (32) to the crown (12) and a carcass reinforcement (34) anchored in each bead (32), the crown (12) comprising a crown reinforcement (16) and a tread (14), the carcass reinforcement (34) extending in each sidewall (30) and in the crown (12) radially to the inside of the crown reinforcement (16), the carcass reinforcement (34) comprises first and second carcass layers (36, 37), the tyre (11) has a sidewall height H defined by H = SW x AR / 100 with SW the nominal section width and AR the nominal aspect ratio of the tyre according to the ETRTO Standards Manual 2019 such that H ≥ 95,
**characterized in that** the crown reinforcement (16) comprises a working reinforcement (20) comprising a radially inner working layer (24) and a radially outer working layer (26) arranged radially outside the radially inner working layer (24), **in that** the crown reinforcement (16) comprises a hoop reinforcement (22) arranged radially outside the working reinforcement, **in that** the tyre (11) has a load index LI such that LI ≥ LI'+1 and LI' being the load index of an EXTRA LOAD tyre having the same size according to the ETRTO Standards Manual 2019, **in that** 0.88 ≤ H/LI ≤ 0.98 and **in that** the tyre has a nominal section width SW ranging from 225 to 315, a nominal aspect ratio ranging from 25 to 55, a nominal rim diameter ranging from 18 to 23 and a load index LI ranging from 98 to 116.

2. Tyre (11) according to the preceding claim, wherein LI'+1 ≤ LI ≤ LI'+4, preferably LI'+2 ≤ LI ≤ LI'+4.

3. Tyre (11) according to any one of the preceding claims, wherein each first and second carcass layer (36, 37) is axially delimited by two axial edges (361, 362, 371, 372) of the carcass layer (36, 37) and comprises carcass textile filamentary reinforcing elements (360, 370) extending axially from one axial edge to the other axial edge of the carcass layer (36, 37) along a main direction forming, in absolute value, an angle of from 80° to 90° with the circumferential direction (X) of the tyre (11).

4. Tyre (11) according to any one of the preceding claims, having a nominal section width SW ranging from 245 to 315, a nominal aspect ratio ranging from 30 to 45, a nominal rim diameter ranging from 18 to 23 and a load index LI ranging from 98 to 116.

5. Tyre (11) according to any one of the preceding claims, the size and load index LI being selected from the following sizes and load indexes: 225/55R18 105, 225/55ZR18 105, 205/55R19 100, 205/55ZR19 100, 235/45R21 104, 235/45ZR21 104, 285/45R22 116, 285/45ZR22 116, 245/40R19 101, 245/40ZR19 101, 255/40R20 104, 255/40ZR20 104, 245/40R21 103, 245/40ZR21 103, 255/40R21 105, 255/40ZR21 105, 265/40R21 108, 265/40ZR21 108, 255/40R22 106, 255/40ZR22 106, 275/35R21 105, 275/35ZR21 105, 285/35R21 108, 285/35ZR21 108, 295/35R22 111, 295/35ZR22 111, 275/35R23 108, 275/35ZR23 108, 325/30R21 111, 325/30ZR21 111.

6. Tyre (11) according to any one of the preceding claims, wherein each working layer (24, 26) is axially delimited by two axial edges (241, 242, 261, 262) of said working layer (24, 26) and comprises working filamentary reinforcing elements extending axially from one axial edge to the other axial edge of said working layer (24, 26) substantially parallel to one another.

7. Tyre (11) according to the preceding claim, wherein each working filamentary reinforcing element extends along a main direction forming, in absolute value, an angle strictly greater than 10°, preferably from 15° to 50° and more preferably from 20° to 35°, with the circumferential direction (X) of the tyre (11).

8. Tyre (11) according to any one of the preceding claims, wherein the hoop reinforcement (22) is axially delimited by two axial edges (281, 282) of the hoop reinforcement and comprises at least one hooping filamentary reinforcing element wound circumferentially in a helix so as to extend axially between the axial edges (281, 282) of the hoop reinforcement (22).

9. Mounted assembly (10) comprising:
• a mounting support (100) comprising a rim (200), and
• a tyre (11) according to any one of the preceding claims mounted on the rim (200).

10. Mounted assembly (10) according to the preceding claim, wherein, the crown reinforcement (16) being arranged radially between the tread (14) and the carcass reinforcement (34) and comprising a working reinforcement (20) comprising at least one axially narrowest working layer (26), the axially narrowest working layer (26) having an axial width T2 expressed in mm, and the rim (200) having a rim width A according to the ETRTO Standards Manual 2019, and expressed in mm, the ratio T2/A is such that T2/A ≤ 1.00, preferably 0.85 ≤ T2/A ≤ 0.97, more preferably 0.90 ≤ T2/A ≤ 0.97 and very preferably 0.93 ≤ T2/A ≤ 0.97.

11. Use of a tyre (11) according to any one of claims 1 to 8, for mounting the tyre (11) on a vehicle having a hybrid or electric powertrain.

12. Passenger car comprising at least one tyre (11) according to any one of claims 1 to 8 or a mounted assembly (10) according to claim 9 or 10, passenger car preferably having an electric or hybrid powertrain.
